# EUROPEAN PATENT APPLICATION

(11) **EP 2 407 890 A1**
(43) Date of publication of application: **18.01.2012**
(21) Application number: 09841441.0
(22) Date of filing: 09.03.2009
(51) Int. Cl.: G06F 15/177, G06F 15/173

(54) **INFORMATION PROCESSING DEVICE**

(71) Applicant: Fujitsu Limited, Kawasaki-shi, Kanagawa 211-8588 (JP)
(72) Inventor: YAMAMOTO, Takashi, Kawasaki-shi Kanagawa 211-8588 (JP); UEKI, Toshikazu, Kawasaki-shi Kanagawa 211-8588 (JP); HOSOKAWA, Yuka, Kawasaki-shi Kanagawa 211-8588 (JP); SATO, Kenta, Kawasaki-shi Kanagawa 211-8588 (JP)
(74) Representative: Holz, Ulrike
(86) International application number: PCT/JP2009/054469
(87) International publication number: WO 2010/103610

(57) **Abstract**

An arbitration unit, when a blocking error disabling data from being output to a destination node from an output buffer occurs in any one of the destination nodes, determines an input buffer connected to the output buffer from within the input buffers including the input buffer retaining the data addressed to the destination node in which the blocking error occurs, and a connection switchover unit connects the determined input buffer to the output buffer of the destination node for the data retained in the input buffer.

## Description

### [Technical Field]

The present invention relates to an information processing device including a plurality of devices which transfer and receive data.

### [Background Art]

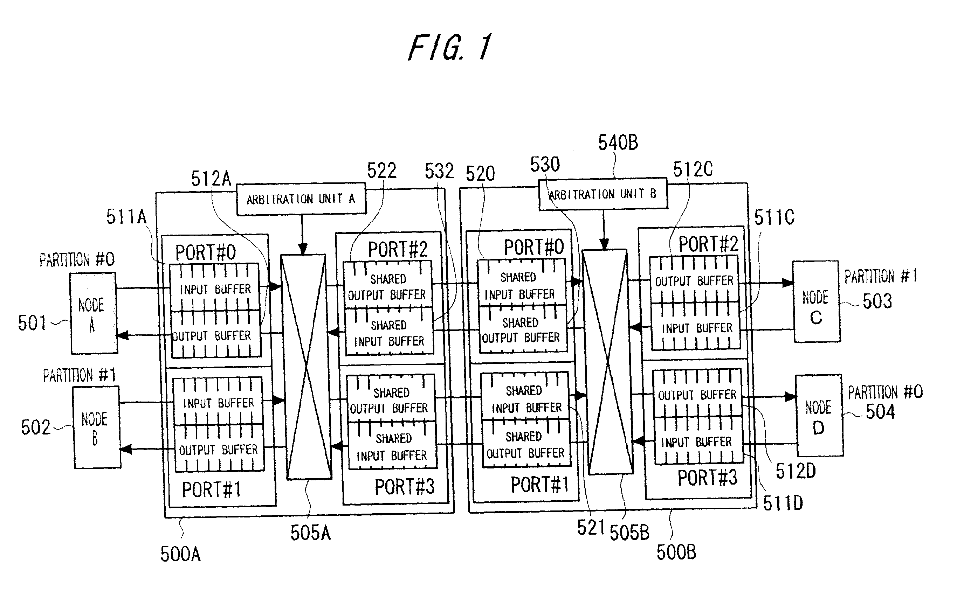

A configuration of an information processing device has become complicated in recent years. To give one example, a known system is configured by mutually connecting a plurality of devices called nodes via a connection switchover unit such as a crossbar switch in a switchover-enabled manner. FIG. 1 illustrates a system including four nodes (a node A through a node D) as that type of system.

In the system of FIG. 1, a node A 501, a node B 502, a node C 503 and a node D 504 are connected via two network units 500A, 500B connected to each other. Herein, each node such as the node A 501 includes, e.g., a CPU, a memory, etc. The node is, e.g., a computer. Any one of the nodes such as the node A 501 may also be, e.g., an input/output device functioning as an I/O interface with the outside of the system.

Further, the network units 500A, 500B can be exemplified as network components which include connection switchover units 505A, 505B and connect a plurality of ports (e.g., PORT#0, PORT#1, PORT#2, PORT#3) to each other. Moreover, the connection switchover units 505A, 505B are exemplified by crossbar switches. The network units 500A, 500B establish one-to-one connections between the ports PORT#0 through PORT#3.

Then, the port PORT#0 of the connection switchover unit 505A is provided with an input buffer 511A which inputs data from the node A 501 and an output buffer 512A which outputs the data to the node A 501. Then, in this system, the node A 501 is connected to the network unit 500A via the input buffer 511A and the output buffer 512A. Then, the node A 501 inputs the data to the network unit 500A via the input buffer 511A. Further, the node A 501 receives the data from the network unit 500A via the output buffer 512A. A connective relation between nodes B 502, C 503, D 504 and the network units 500A, 500B is the same with the node A 501.

On the other hand, the port PORT#2 of the connection switchover unit 505A is provided with a shared output buffer 522 and a shared input buffer 532. Further, the port PORT#0 of the connection switchover unit 505B is provided with a shared input buffer 520 and a shared output buffer 530. Then, the port PORT#2 of the connection switchover unit 505A is connected to the port PORT#0 of the connection switchover unit 505B by establishing the connections between the shared output buffer 522 and the shared input buffer 520 and between the shared output buffer 530 and the shared input buffer 532, respectively. The connection between the port PORT#3 of the connection switchover unit 505A and the port PORT#1 of the connection switchover unit 505B is established in the same way as establishing the connection between the port PORT#2 of the connection switchover unit 505A and the port PORT#0 of the connection switchover unit 505B.

The input buffer 511A and the output buffer 512A each dedicated to the node A 501 are provided between the node A 501 and the connection switchover unit 505A. If the dedicated buffer is provided for every node connected to the network, hardware resources increase in quantity, and hence a common buffer is shared with a plurality of nodes in order to utilize the hardware resources effectively as the case may be. For example, in FIG. 1, the input buffer and the output buffer between the connection switchover unit 5A and the connection switchover unit 5B are the resources shared with the nodes.

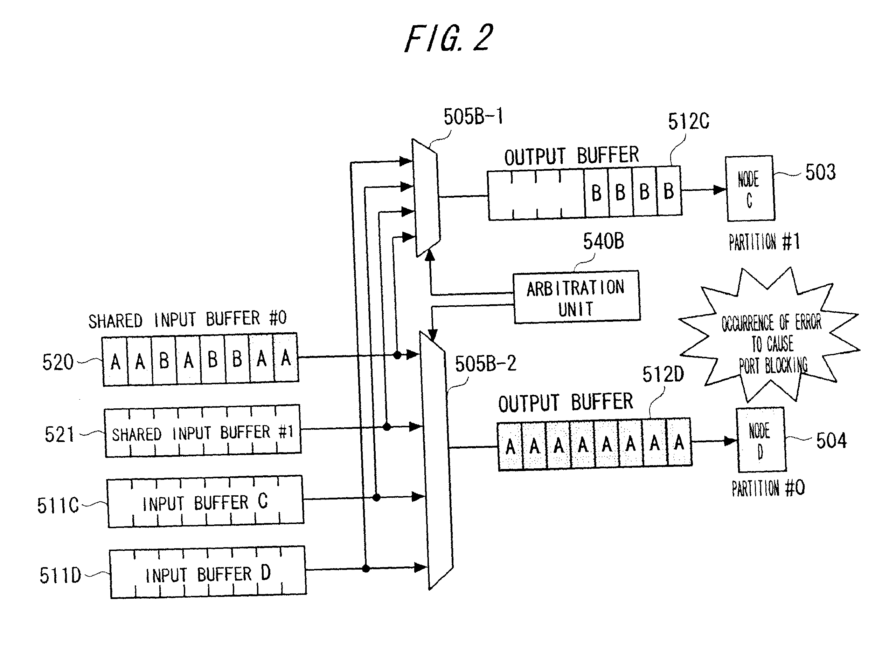

FIG. 2 illustrates a problem which arises in the system having such a configuration. FIG. 2 illustrates components related to the node C 503 and the node D 504, which are extracted from the configuration of FIG. 1. Further, FIG. 2 illustrates a switch 505B-1 related to the node C 503 and a switch 505B-2 related to the node D 504 in the connection switchover unit 505B. The data is inputted via the shared input buffers 520, 521 and the input buffers 511C, 511D to the respective switches 505B-1, 505B-2 of the connection switchover unit 505B. Note that sets of data sent from the node A 501 and the node B 502 are depicted by "A" and "B" in the shared input buffer 520. Herein, one set of data is called a packet.

Furthermore, the data coming from the node B 502 is accumulated in the output buffer 512C toward the node C 503. In the example of FIG. 2, it is because one partition #1 embraces the node B 502 and the node C 503 and a destination of the data sent from the node B 502 is determined to be the node C 503. Similarly, one partition #0 embraces the node A 501 and the node D 504 and the destination of the data sent from the node A 501 is determined to be the node D 504.

Herein, the partition connotes an individual processing device segment when the information processing device is segmented into a plurality of logic processing device segments. To give an example of this type of partition, for instance, a known partition is what includes any one of a plurality of processors and an input/output device in a case where the information processing device includes the plurality of processors and the plurality of input/output devices. The partitions such as this provide an information system including, e.g., the plurality of processing device segments having different functions.

Accordingly, in the example of FIG. 2, within the partition #0, the packet forwarded to the node D 504 from the node A 501 is indicated by "A" in the shared input buffer 520. In the following discussion, the packet forwarded to the node D 504 from the node A 501 is simply referred to as a packet A. Further, within the partition #1, the packet forwarded to the node C 503 from the node B 502 is indicated by "B" in the shared input buffer 520. In the following discussion, the packet forwarded to the node C 503 from the node B 502 is simply referred to as a packet B.

Moreover, FIG. 2 illustrates an arbitration unit (arbiter) 540B which arbitrates a conflict between the nodes connected via the connection switchover unit 505B. The arbitration unit 540B determines a priority of the connection in the case of connecting the shared input buffers 520, 521 and the input buffers 511C, 511D (which will hereinafter be generically the input buffers in a simple form) via the connection switchover unit 505B. Namely, in those input buffers, the input buffers accumulated with the data are connected via the connection switchover unit 505B to the output buffers 512C, 512D, etc defined as the forwarding destination buffers, and it follows that the data is handed over to the connected output buffers. If the connection target output buffers to which the input buffers are connected conflict with each other, however, the arbitration unit 540B determines the priority of the connection. Then, the input buffers are sequentially connected, based on this connection priority, to the output buffers via the connection switchover unit 505B. In this case, the unit for determining which input buffer (or which port) is given the priority to establish the connection, is the arbitration unit 540B.

Incidentally, as described above, if the buffers between the network unit 500A and the network unit 500B are the shared buffers between the plurality of nodes, the following problem arises. Herein, as illustrated in FIG. 2, what is presumed is a case in which a port blocking error occurs in the node D 504 serving as the destination node of the packet sent from the node A 501. In this case, the packet A addressed to the node D 504 is not output to the destination node D 504 from the shared input buffer 520. Therefore, the packet B addressed to the node C 503 existing posterior to the packet A can not be output from the shared input buffer 520. Accordingly, there is a possibility that the error in the node D 504 affects the communications between the node B 502 and the node C 503. Then, another possibility is that the error in the one processing device leads to a mutual-downfall error as the case may be, in which the data is disabled from being transferred and received between other processing devices.

### [Patent document ]

[Patent document 1]Japanese Patent Application Laid-Open Publication No.2006-178786
[Patent document 2]Japanese Patent Application Laid-Open Publication No.H07-152697
[Patent document 3]Japanese Patent Application Laid-Open Publication No.H09-153020

### [Disclosure of the Invention]

### [Problems to be solved by the invention]

It is an object of the embodiment of the disclosure to provide a technology of reducing a degree of how much an error in one node pair affects other nodes in an information processing device where a plurality of pairs a source node and a destination node are connected via shared buffers.

### [Means for solving the Problems]

One mode of the embodiment of the disclosure is exemplified by way of an information processing device having a plurality of input buffers to include shared input buffer which retains data transmitted to destination nodes from a plurality of source nodes, an output buffer to retain the data on a per destination node basis for a period till the data transmitted to the destination node is output to the destination node, a connection switchover unit to establish a connection in a switchable manner between the input buffer and the output buffer; and an arbitration unit to determine an input buffer connected to the output buffer by the connection switchover unit from within the plurality of input buffers.

Then, the arbitration unit, when a blocking error disabling the data from being output to the destination node from the output buffer occurs in any one of the destination nodes, determines the input buffer connected to the output buffer from within the input buffers including the input buffer retaining the data addressed to the destination node in which the blocking error occurs, and the connection switchover unit connects the determined input buffer to the output buffer of the destination node for the data retained in the input buffer.

### [Effects of the invention]

According to the present invention, it is feasible to reduce the degree of how much the error in one node pair affects other nodes in the information processing device where the plurality of pairs the source node and the destination node are connected via the shared buffers.

### [Brief Description of the Drawings]

[FIG.1] A diagram of one example of a system including four nodes and a connection switchover unit.
[FIG.2] A diagram illustrating a problem which arises in a conventional system.
[FIG.3] A diagram illustrating a whole configuration of an information processing device according to a first working example.
[FIG.4] A diagram illustrating a specific configuration of the information processing device.
[FIG.5] A diagram illustrating relations between input buffers, a connection switchover unit and transfer destination nodes including output buffers.
[FIG.6] A diagram illustrating an outline of a process when an error occurs.
[FIG.7] A diagram illustrating a configuration of an error control unit.
[FIG.8] A diagram illustrating a configuration of a credit control unit.
[FIG.9] A diagram illustrating a configuration of an arbitration unit.
[FIG.10] A diagram illustrating details of a table unit.
[FIG.11] A diagram illustrating a structure of a packet.
[FIG.12] A diagram illustrating a structure of error information.
[FIG.13] A data flow chart illustrating a data process in the information processing device.
[FIG.14] A diagram illustrating a connecting process in a network unit in a second working example.
[FIG.15] A diagram illustrating an in-depth configuration of the arbitration unit.

### [Description of the Reference Numerals and Symbols]

- 1: information processing device
- 5A, 5B: connection switchover unit
- 5-1, 5-2, 5-3, 5-4: switch
- 11A, 11B, 11C, 11D: input buffer
- 12A, 12B, 12C, 12D: output buffer
- 20, 21, 32, 33: shared input buffer
- 22, 23, 30, 31: shared output buffer
- 40A, 40B: arbitration unit
- 50: system service processor
- 60: error control unit
- 70: buffer control unit (2)
- 80: credit control unit (2)
- 90: buffer control unit (1)
- 100: credit control unit (1)

### [Best mode of Carrying out the Invention]

An information processing device 1 according to a best mode (which will hereinafter be termed an embodiment) for carrying out the present invention will hereinafter be described with reference to the drawings. A configuration in the following embodiment is an exemplification, and the present invention is not limited to the configuration in the embodiment.

### [First Working Example]

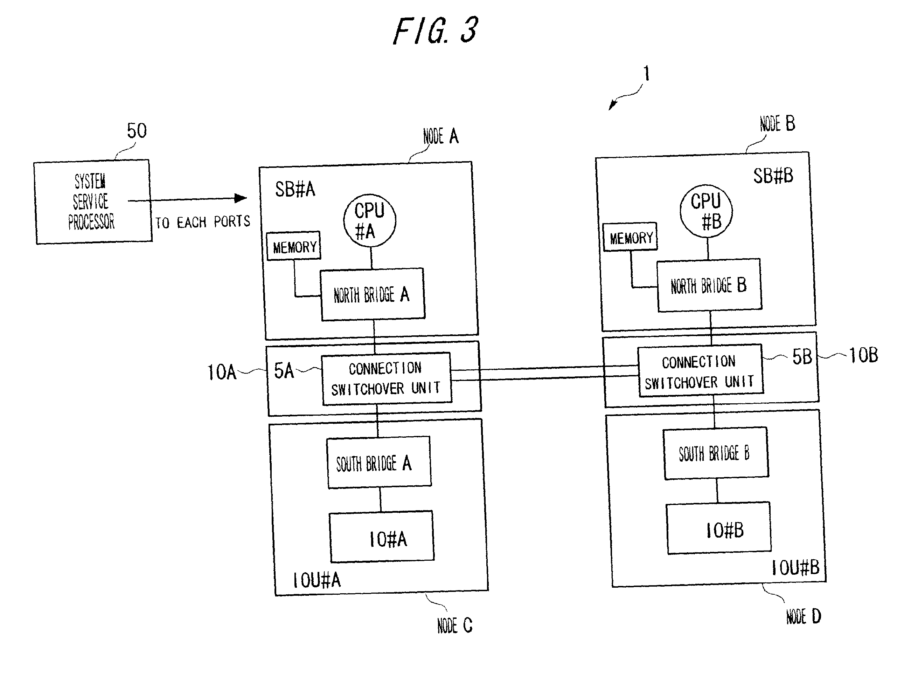

FIG. 3 is a diagram illustrating a whole configuration of the information processing device 1. The information processing device 1 includes computers called a plurality of nodes. FIG. 3 illustrates four nodes, i.e., nodes A, B, C and D.

Among these nodes, the node A (SB#A) and the node B (SB#B) are the computers called system boards. Each of the node A and the node B is mounted with a CPU, a memory and a chipset called a Northbridge. Further, each of the node C and the node D is mounted with a chipset called a Southbridge, and provides a function as an I/O unit (IOU#A/B). For example, an external storage device, an attachable/detachable storage medium drive, a LAN (Local Area Network) board, etc are connected to the I/O unit (IOU#A/B).

Connections between the system boards and the I/0 units are established by network units 10A, 10B. The network units 10A, 10B include connection switchover units 5A, 5B, respectively. Crossbar switches are respectively exemplified as the connection switchover units 5A, 5B.

Further, in FIG. 3, the connection switchover units 5A, 5B are connected to each other. In the first working example, a combinatory arrangement of the system board and the I/O unit may not be fixed. Namely, the combinatory arrangements of the system boards and the I/O units are varied by changing tables for specifying the connections of the nodes, which are incorporated into the connection switchover units 5A, 5B.

In the first working example, based on definitions of these tables, for example, the system board SB#A and the I/O unit IOU#B are combined. In the first working example, this combination is called a partition #0. The combination of the system board SB#B and the I/O unit IOU#A is called a partition #1. Moreover, the network units 10A, 10B including the connection switchover units 5A, 5B are defined as resources shared with the partitions.

The information processing device 1 is partitioned, thereby providing a user with, e.g., different types of computer environments on a partition-by-partition basis. For example, different types of OSs (Operating Systems) can be also loaded into the partitions #0 and #1, respectively. For instance, one OS may be Windows (registered trademark)), while the other OS may be an OS inherent in a computer maker.

Further, FIG. 3 illustrates a system service processor 50 which controls the information processing device 1. The system service processor 50 controls the respective units, e.g., the individual nodes and the network units 10A, 10B of the information processing device 1. Herein, the term "control" connotes, e.g., starting up the information processing device 1, monitoring the respective units of the information processing device 1, collecting execution statuses of processes and implementing error handling etc. In the first working example, the system including the information processing device 1 and the system service processor 50 is called an information system. The system service processor 50 corresponds to a control device to monitor at least occurrence of the error in the information processing device.

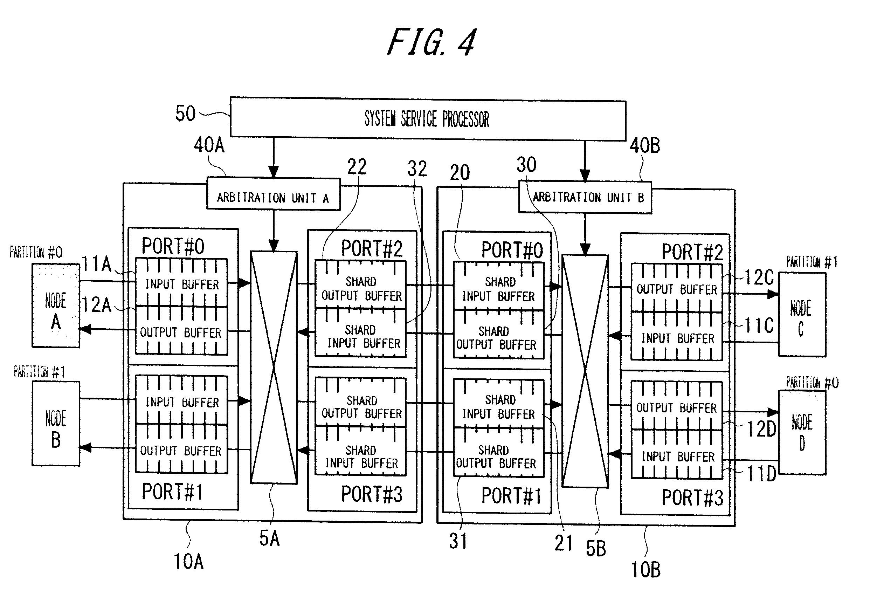

FIG. 4 illustrates a specific configuration of the information processing device 1. As in FIG. 4, the information system includes the system boards called the nodes A, B, the I/O units called the nodes C, D and the two network units 10A, 10B connected to each other.

Moreover, the network units 10A, 10B respectively include the connection switchover units 5A, 5B. The connection switchover units 5A, 5B can be exemplified as network components which mutually connect a plurality of ports (e.g., PORT#0, PORT#L, PORT#2, PORT#3).

Then, the port PORT#0 of the connection switchover unit 5A is provided with an input buffer 11A which is inputted data from the node A and an output buffer 12A which outputs the data to the node A. Then, in this system, the node A is connected via the input buffer 11A and the output buffer 12A to the network unit 10A. Then, the node A inputs the data to the network unit 10A via the input buffer 11A. Further, the node A receives the data via the output buffer 12A from the network unit 10A. Each of the connective relations between the nodes B, C, D and the network unit 10A is the same as the connective relation between the node A and the network unit 10A. Moreover, the connective relations established with the network unit 10B are the same as the connective relations with the network unit 10A.

On the other hand, the port PORT#2 of the connection switchover unit 5A is provided with a shared output buffer 22 and a shared input buffer 32. Further, the port PORT#0 of the connection switchover unit 5B is provided with a shared input buffer 20 and a shared output buffer 30. Then, connections between the shared output buffer 22 and the shared input buffer 20 and between the shared output buffer 30 and the shared input buffer 32 are established, thereby connecting the port PORT#2 of the connection switchover unit 5A to the port PORT#0 of the connection switchover unit 5B. The connection between the port PORT#3 of the connection switchover unit 5A and the port PORT#1 of the connection switchover unit 5B is established in the same way as described above.

Further, the network units 10A, 10B have arbitration units 40A, 40B, respectively. The arbitration units 40A, 40B control the connections between the respective ports of the connection switchover units 5A, 5B. For example, if a conflict occurs in the connection targets between the port PORT#0 and the port PORT#L, the arbitration units 40A, 40B determine a preferential connection port according to a predetermined standard such as an LRU (Least Recently Used) algorithm.

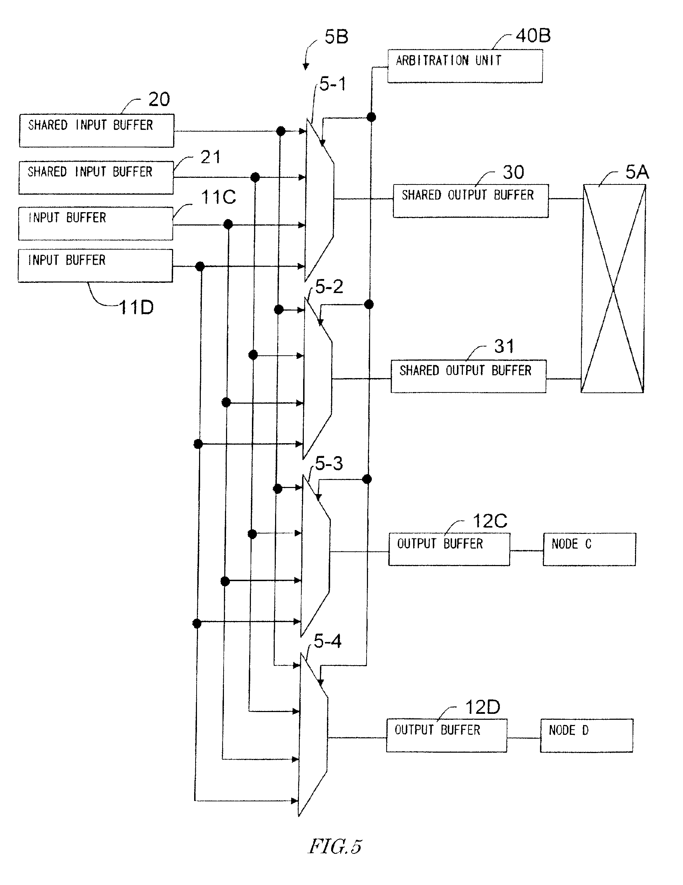

FIG. 5 is a diagram illustrating relations between the input buffers including the shared input buffers 20, 21 and the transfer destination nodes C, D. FIG. 5 depicts the connection switchover unit 5B that is segmented into switches 5-1, 5-2, 5-3 and 5-4. The switch 5-1 connects any one of the input buffers including the shared input buffers 20, 21 to the shared output buffer 30. Packets in the shared output buffer 30 are sequentially provided to the connection switchover unit 5A. Similarly, the switch 5-2 selects any one of the input buffers including the shared input buffers 20, 21, and outputs the packets retained in a head field of the selected input buffer to the shared output buffer 31.

Moreover, the switch 5-3 selects any one of the input buffers including the shared input buffers 20, 21, and outputs the packets retained in the head field of the selected input buffer to the output buffer 12C. The node C sequentially reads the packets that are output to the output buffer 12C. Similarly, the switch 5-4 selects any one of the input buffers including the shared input buffers 20, 21, and outputs the packets retained in the head field of the selected input buffer to the shared output buffer 12D.

The arbitration unit 40B selects, based on the predetermined standard, any one of the input buffers including the shared input buffers 20, 21 with respect to each of the switches 5-1, 5-2, 5-3 and 5-4.

In the first working example, the partition #0 embraces the node A and the node D. Further, the partition #1 embraces the node B and the node C. Accordingly, the arbitration unit 40B and the switch 5-3 output the packets in any one of the shared input buffers 20, 21 and the input buffers 11C, 11D each retaining the packets sent from the node B to the output buffer 12 of which the packets are addressed to the node C. To describe a more specific process, for instance, if a transmission request target packet exists in each individual input buffer, this input buffer sends a transmission request to the arbitration unit 40B. Then, e.g., if the requests for the transmission to the node C conflict with each other, the arbitration unit 40B selects any one of the plurality of input buffers having the transmission requests to the node C on the basis of the predetermined standard, establishes the connection via the switch 5-3 to the output buffer 12C defined as a read target buffer for the node C.

Furthermore, the arbitration unit 40B and the switch 5-4 connect any one of the shared input buffers 20, 21 and the input buffers 11C, 11D each retaining the packets sent from the node A to the output buffer 12D addressed to the node D.

Consequently, the packets sent from the node B defined as the source node are accumulated in the output buffer 12C. Further, the packets sent from the node A as the source node are accumulated in the output buffer 12D. On the other hand, for instance, the packets coming from the node A and the node B as the source nodes exist in mixture in the shared input buffer 20.

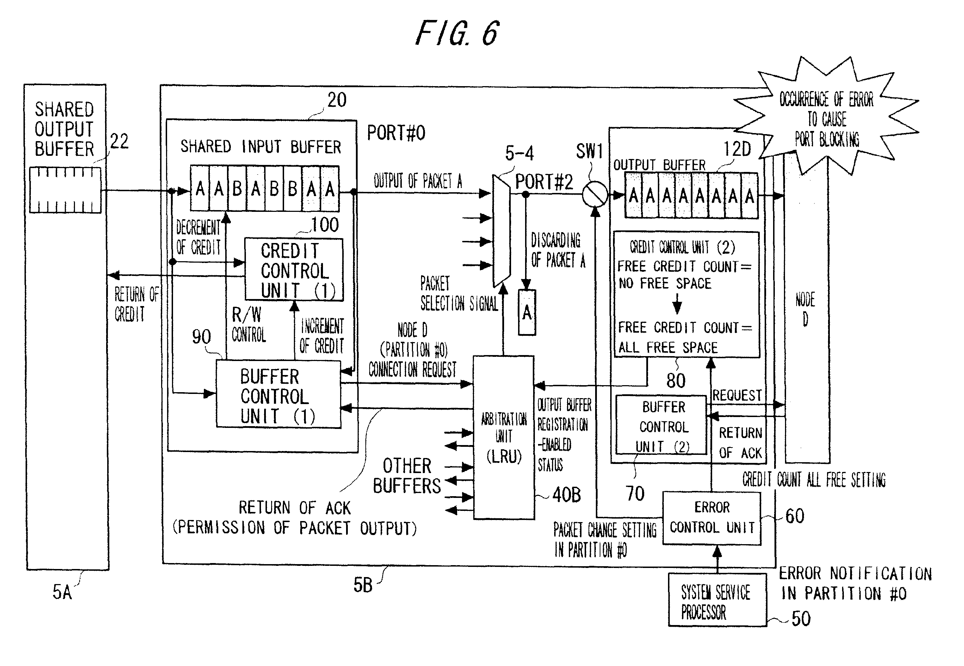

FIG. 6 illustrates an outline of the process when an error occurs. FIG. 6 illustrates details of the components related to, particularly, the node D in the configurations depicted in FIGS. 3 - 5. FIG. 6 depicts the packet indicated by the letters "A", "B" in the shared input buffer 20. Herein, the packet indicated by "A" is the packet coming from the node A as the source node. Further, the packet indicated by "B" is the packet coming from the node B as the source node.

Now, such a case is considered by way of one example that an error of port blocking occurs in the node D belonging to the partition #0. The port blocking implies an error status disabling the node D from reading the packets out of the output buffer 12D. If the error of port blocking occurs, the packets remain accumulated in the output buffer 12D connected to the node D. Moreover, an overflow takes place in the output buffer 12D connected to the node D due to outputting new packets from the switch 5-4.

In the conventional process, if the overflows takes place in the output buffer 12D with the result that there is no free capacity, the packets existing in the output buffer 12, i.e., being addressed to the node D are excluded from the arbitration processing target packets of the arbitration unit 40B. For example, as in FIG. 6, the packets coming from the node A belonging to the partition #0 are retained in the head field of the shared input buffer 20, in which case it follows that the shared input buffer 20 is excluded from the arbitration processing target buffers of the arbitration unit 40B.

In the configuration of FIG. 6, a buffer control unit (1)90 and a credit control unit (1)100 are provided for administering and controlling the shared input buffer 20. The buffer control unit (1)90 executes processes of storing the packets in the shared input buffer 20, administering a free space of the shared input buffer 20 and inputting, to the arbitration unit 40B, a request for the connection to the destination corresponding to the head packet in the shared input buffer. For example, the buffer control unit (1)90, when the packet is written to the shared input buffer 20 from the shared output buffer 22 of the connection switchover unit 5A, instructs the credit control unit (1)100 to decrement a free space count by 1. This free space count is called a credit count.

Further, the buffer control unit (1)90, when the packet exists in the shared input buffer 20, sends the connection request to the arbitration unit 40B. Through the arbitration process of the arbitration unit 40B, the packet is read from the output buffer 20 via the connection switchover unit 5-4, at which time the credit control unit (1)100 increments the credit count by 1.

On the other hand, the credit control unit (1)100 counts the credit count in a way that corresponds to storing and reading the packets in and from the shared input buffer 20. Note that the free space count of the output buffer 20 is managed as the credit count in the first working example, however, to reverse the definition, an in-use area count may also be managed as the credit count.

Similarly, a buffer control unit (2)70 and a credit control unit (2)80 are provided for administering and controlling the output buffer 12D. Note that the arbitration unit 40B is notified of the credit count of the credit control unit (2)80 or the free status of the buffer 12D.

Further, in FIG. 6, an error control unit 60 is provided, which receives an error notification from the system service processor 50 and executes a process corresponding to the error notification. For instance, if the error occurs in the node D, the system service processor 50, which monitors the error, notifies the error information control unit 60 of the error. For instance, if the blocking error occurs in the node D, along with the reception of the packets from the switch 5-4, the free space of the output buffer 12D decreases. Then, finally, the free space of the output buffer 12D disappears. In this state, the credit control unit (2)80 comes to a none-of-credit-count status (credit count = 0) representing a status of the free space of the output buffer 12D.

The error information control unit 60, if the notified error is classified as the blocking error, instructs the credit control unit (2)80 to set a maximum value of the credit count. Accordingly, if the blocking error occurs, it follows that the credit count is not coincident with an entity of the free pace status of the buffer 12D.

Further, a cutoff unit SW1 is provided at an ingress of the output buffer 12D, i.e., at a transmission path which connects the switch 5-4 to the output buffer 12D. The cutoff unit SW1 is exemplified such as a switch and a transfer gate for switching over the transmission path to a cutoff status or a connection status. The cutoff unit SW1 may be provided with a register for controlling the cutoff unit SW1 in the cutoff statues or the connection status. The error control unit 60 sets the cutoff unit SW1 in the cutoff status, thereby discarding the packets that are output to the output buffer 12D from the switch 5-4. The packets of the partition #0 are output to the output buffer 12D, and therefore the packets to be discarded are the packets of the partition #0.

Note that when the overflow takes place in the output buffer 12D, a storage area for the subsequent packets that are output to the output buffer disappears, and it follows that the subsequent packets are to be discarded. Accordingly, the setting for discarding the packets may not be done in the input unit of the output buffer 12D. The explicit setting for discarding the packets further ensures the operation of the information processing device 1.

As discussed above, the free credit count is set at the maximum value, whereby the output buffer 12D comes to a status of its being determined to be free. The credit control unit (2)80 notifies the arbitration unit 40B of the maximum value of the credit count or information representing a receivable status of the output buffer 12D. The arbitration unit 40B of the connection switchover unit 5B receives the information representing the receivable status of the output buffer 12D and the connection requests sent from the input buffers including the shared input buffer 20, and thereby sets the connection requester input buffers as the arbitration processing target buffers. Namely, in the first working example, when receiving the connection requests from the input buffers, a connection request accepting condition is that the output buffers serving as the destination buffers of the data retained in the input buffers have the free spaces. As a result, the arbitration unit 40B selects, based on, e.g., the LRU algorithm, the shared input buffer 20 as the input buffer connected to the switch 5-4 from the plurality of input buffers including the shared input buffer 20. After the arbitration process such as this, the arbitration unit 40B sends ACK (Acknowledgment) back to the shared input buffer 20.

Then, as a result of the arbitration process based on the standard, for instance, when the shared input buffer 20 is selected, the shared input buffer 20 is connected to the switch 5-4. Then, a head packet A of the shared input buffer 20 is output to the output buffer 12D. This packet A is discarded based on the discard setting at the ingress of the output buffer 12D.

On the other hand, the buffer control unit (1)90, with the ACK reception, causes the credit control unit (1)100 to increment the credit count by 1.

With the configuration described above, the packets (belonging to the partition #0) coming from the node A are output from the shared input buffer 20, whereby the credit return is normally conducted for the network unit 5A. Then, the packet existing in the head field of the shared input buffer 20 and belonging to the partition #0 is output via the connection switchover unit 5B. As a result, the packet addressed to the node where the blocking error occurs, i.e., the subsequent packet within the shared input buffer 20, e.g., the packet from the node B, becomes the next arbitration processing target packet. As in the first working example, the partition #0 embraces the nodes A, D, while the partition #1 embraces the nodes B, C, in which case a degree of how much the blocking error in one partition affects another partition is reduced.

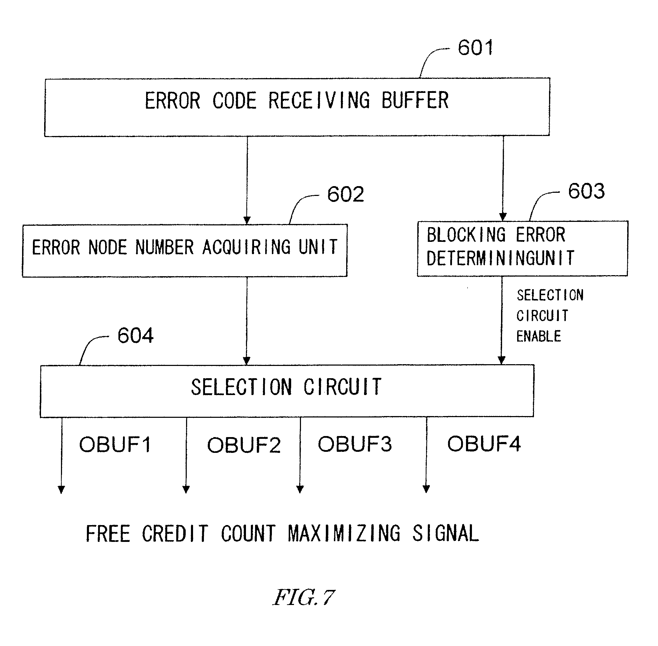

FIG. 7 illustrates a configuration of the error control unit 60. As in FIG. 7, the error control unit 60 includes an error receiving unit 601, an error node number acquiring unit 602, a blocking error determining unit 603 and a selection circuit 604.

The error receiving unit 601 is stored with an error code given from the system service processor 50. The error receiving unit 601 is, e.g., a register. The error node number acquiring unit 602 reads bits of an error node number field of the error receiving unit 601. The error node number acquiring unit 602 includes a register containing mask bits for masking desired bits, an AND gate, a shift register, etc. Then, a value acquired by the error node number acquiring unit 602 is inputted to the selection circuit 604.

The block error determining unit 603 reads a bit of an error code field of the error receiving unit 601. Then, the block error determining unit 603 determines whether the bit corresponding to the blocking error is ON or not. The block error determining unit 603 includes, e.g., a flip-flop. If the bit corresponding to the blocking error in the error code is ON, the block error determining unit 603 makes the selection circuit enable to operate (permission of the operation).

Then, the selection circuit 604 switches ON a signal line (a free credit count maximizing signal) corresponding to the error node number. In FIG. 7, any one of the signal lines OBUF1 through OBUF4 is switched ON. The signal lines OBUF1 through OBUF4 are inputted to the credit control units of the respective output buffers. The selection circuit 604 is exemplified by a logic circuit which includes, e.g., an inverter and an AND gate and switches ON any one of 00 (e.g., OBUF4), 01 (e.g., OBUF1), 11 (e.g., OBUF3) and 10 (e.g., OBUF2).

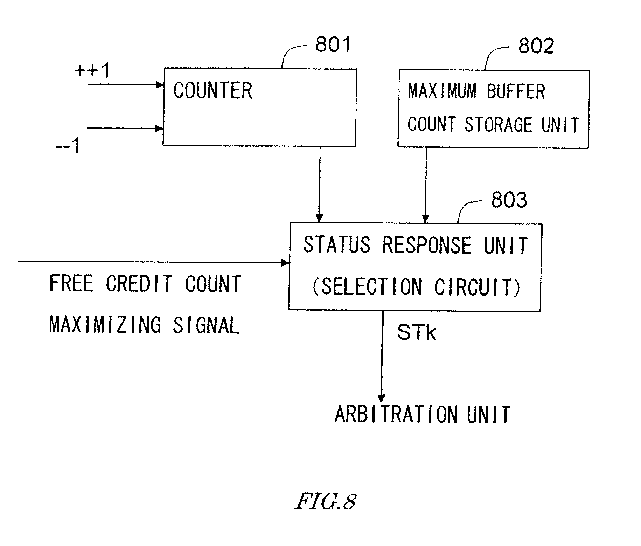

FIG. 8 illustrates a configuration of the credit control unit (2)80. The credit control unit (2)80 includes a counter 801, a maximum buffer count storage unit 802 and a status response unit 803. The counter 801 counts the credit count, i.e., the free buffer count. For example, when the packet is inputted to the output buffer 12D, the counter 801 decrements the credit count by 1. Further, when the packet is read from the output buffer 12D, the counter 801 increments the credit count by 1.

The maximum buffer count storage unit 802 is stored with a buffer capacity, i.e., a maximum value of the number of the packets that can be retained in the output buffer 12D. The status response unit 803 selects any one of the value of the counter 801 and the value of the maximum buffer count storage unit 802 in a manner that corresponds to whether the free credit count maximizing signal exists or not, and notifies the arbitration unit 40B of the selected value. Thus, the arbitration unit 40B is notified of the credit count, thereby enabling the arbitration process to be executed corresponding to the credit count. For instance, a priority is given to the input buffer which retains the packets addressed to the output buffer having the large free capacity, and so on. For example, however, if the arbitration unit 40B selects the input buffer on the basis of the LRU algorithm, the status response unit 803 may notify the arbitration unit 40B of information about whether there is the free buffer capacity or not. For example, the status response unit 803 may notify the arbitration unit 40B of the signal indicating that the free buffer exists if the credit count is equal to or larger than a predetermined value, and may notify the arbitration unit 40B of the signal indicating that the free buffer does not exist if the credit count is smaller than the predetermined value. The status response unit 803 corresponds to a notifying unit to notify the arbitration unit of information indicating that the output buffer has a free space.

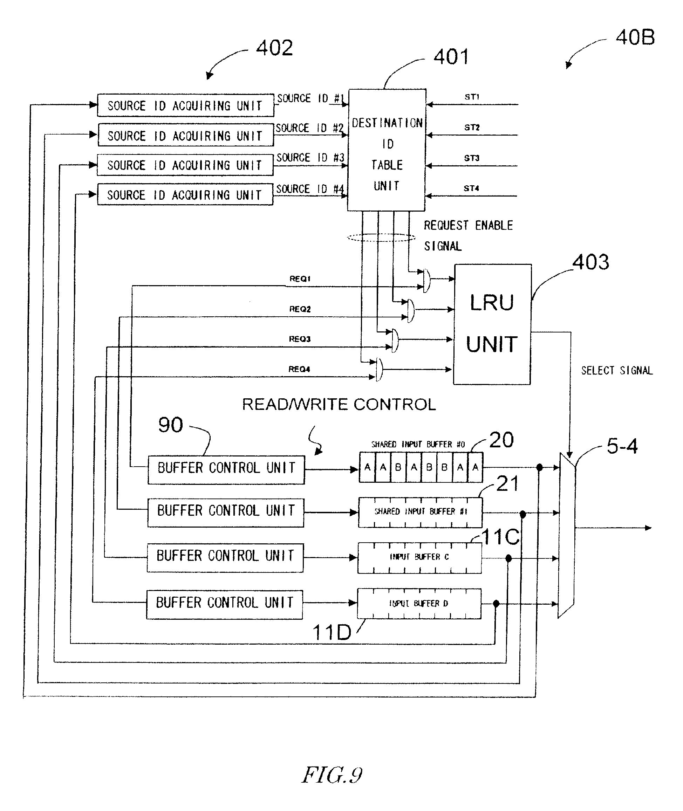

FIG. 9 illustrates a configuration of the arbitration unit 40B. The arbitration unit 40B receives request signals REQ1 - REQ4 from the respective buffer control units, and executes the arbitration process. The arbitration unit 40B includes a source (source) ID acquiring unit 402 which acquires a source (source) ID from each of the input buffers including the shared input buffers 20, 21, a destination table unit 401 which retains a destination associated with the source ID, and an LRU unit 403 which arbitrates the request signals REQ1 - REQ4 transmitted from the respective buffer control units. As in FIG. 9, the request signals REQ1 - REQ4 are paired with the head packets of the respective input buffers and thus inputted to the arbitration unit 40B.

The source ID acquiring unit 402 acquires the source ID from the packet retained in the head field of each input buffer. The source ID is defined as identification information for identifying the packet source node. The destination table unit 401 includes, e.g., a lookup table. The destination table unit 401, upon an input of the source ID, determines a destination (recipient) ID associated with the source ID.

Further, in the first working example, status signals (ST1 - ST4) of the destination node are inputted to the destination table unit 401. Then, the destination table unit 401, if the status signal of the destination node indicates that the output buffer has the free space, outputs a request-enabled signal with respect to the destination. This request-enabled signal is inputted to the control gate which controls whether or not the request signals REQ1 - REQ4 transmitted from the respective buffer control units are handed over to the LRU unit 403. Then, if the request-enabled signal is ON, the request signals REQ1 - REQ4 are handed over to the LRU unit 403.

The LRU unit 403 adjusts the inputted request signals REQ1 - REQ4 according to the LRU algorithm, and sets up the connection of the connection switchover unit 5 including the switch 5-4. The switch unit 5-4 connects, based on the setting of the LRU unit 403, the input buffers (the shared input buffers 20, 21, the input buffers 11C, 11D) to ports of the output buffers corresponding to the respective destination nodes.

Note that, as in FIG. 9, the buffer control unit controls the input (write) and the output (read) of the packet to each of the shared input buffers 20, 21 and the input buffers 11C, 11D on the basis of a READ/WRITE control signal.

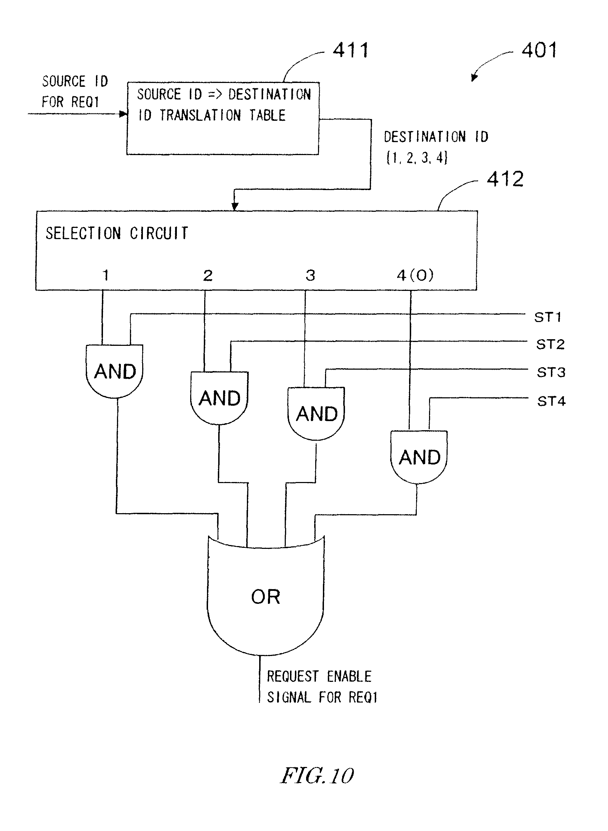

FIG. 10 is a diagram of an in-depth illustration of the table unit 401. FIG. 10 illustrates a circuit for the request signal REQ1 as one of the request signals.

The table unit 401 includes a source ID => destination ID translation table 411 and a selection circuit 412. The source ID => destination ID translation table 411, which is defined as, e.g., a lookup table, returns the destination ID associated with this source ID when the source ID is inputted. Herein, the source ID is an ID for identifying the source node. In FIG. 10, the source ID acquired from the head packet in the input buffer in response to the request signal REQ1, is inputted to the source ID => destination ID translation table 411. Further, the destination ID is an ID for identifying the destination node.

In the first working example, any one of the source node and the destination node is embraced by the partition. The source node and the destination node can be also configured to be a transmission/reception node pair. The source ID => destination ID translation table 411 defines a relation between the source node and the destination node in each partition. For instance, in the first working example, the partition #0 embraces the node A and the node D, while the partition #1 embraces the node B and the node C. Accordingly, in the present information processing device 1, the nodes embraced by each partition can be varied by changing the contents of the source ID => destination ID translation table 411.

The selection circuit 412 switches ON any one of the signal lines 1 - 4 in a way that corresponds to the number of the destination ID. The selection circuit 412 has the same configuration as the selection circuit 604 in FIG. 7 has. As in FIG. 10, this signal line is inputted together with the status signal transmitted from each output buffer to the AND gate. The status signal from the output buffer is switched ON when the credit count indicates that there is the free buffer in the respective output buffers. Accordingly, the AND gate in FIG. 10 is switched ON when there is the request signal addressed to each output buffer and when this output buffer has the free space. In FIG. 10, the output signals of the AND gates are aggregated by an OR gate. Therefore, if the destination node has the free space for the request signal REQ1 transmitted from the buffer control unit of the shared input buffer 20, an enabling signal for the request signal REQ1 is output. Though omitted in FIG. 10, the same circuits are provided for the request signals REQ2 - REQ4.

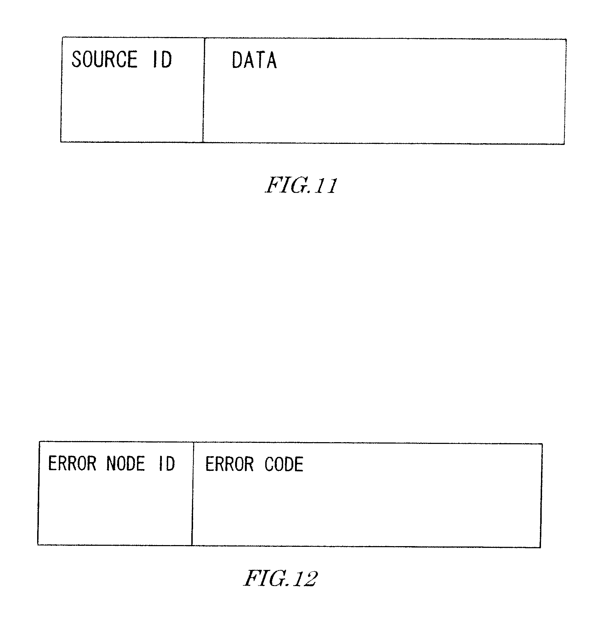

FIG. 11 illustrates a packet structure in the first working example. As in FIG. 11, in the first working example, the packet transferred and received between the nodes has the source ID and the data. The source ID may be specified by the node number of the source node. The source node may also, however, be specified by, e.g., port numbers for identifying an input port and an output port of the connection switchover unit 5B. Further, the connection switchover unit 5B may be provided with a translation table for defining an associative relation between the node number for identifying the source node and the port number. This type of translation table enables, e.g., the logical node number to be used as the information for identifying the source node and the port number to be used as the information for identifying the physical port. Then, the node number and the port number can be translated. Accordingly, the node number and the port number may be separately utilized based on a request in terms of design by way of the packet source ID. Further, the data may be fixed-length data and may also be variable-length data. In the case of the data being the variable-length data, a data length may be stored in a header field of the data part.

FIG. 12 illustrates a structure of the error information sent from the system service processor 50. The error information contains an error node ID and an error code. The error node ID is a number for specifying the node where the error occurs. The error code takes a numeric value representing a degree of the error. For example, in the case of the blocking error, the predetermined bit of the error code becomes "1".

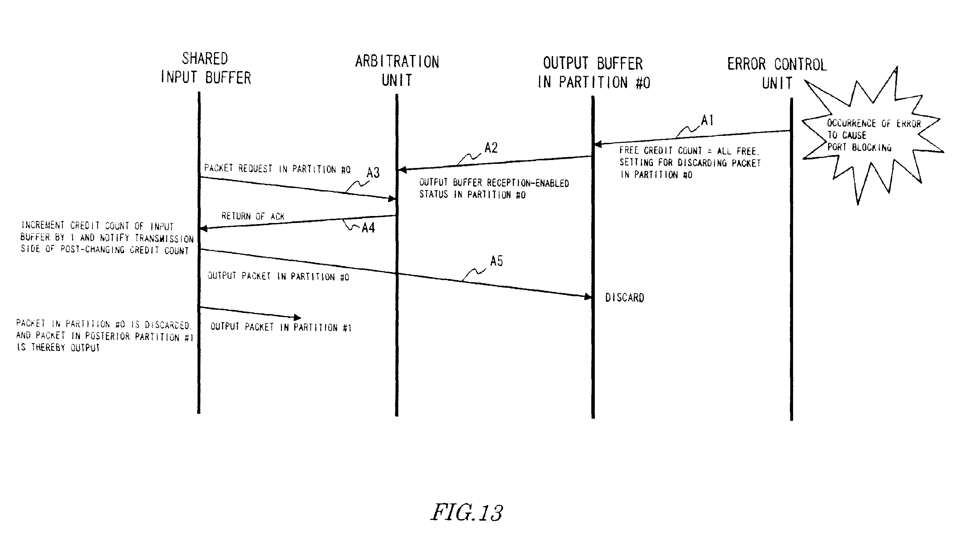

FIG. 13 is a diagram illustrating a series of data processes in the form of a data flowchart in the information processing device 1 depicted in FIG. 6. To begin with, a premise in this process is that the error control unit 60 receives a report saying that the blocking error occurs in the node D belonging to the partition #0. Then, the error control unit 60 transmits, through, e.g., the circuit illustrated in FIG. 7, the credit count maximizing signal to the credit control unit (2)80 of the output buffer 12D toward the node D embraced by the partition #0 (arrowhead A1). The credit count maximizing signal is a signal for setting the credit count indicating that the output buffer 12D has the free space. Furthermore, at this time, the error control unit 60 performs the setting for discarding the packet at the ingress of the output buffer 12D. The packet of the partition #0 is output to the output buffer 12D, and hence it follows that the packet of the partition #0 is discarded by the setting described above.

When receiving the credit count maximizing signal, the credit control unit (2)80 of the output buffer 12D transmits the signal representing the reception-enabled status of the output buffer 12D of the partition #0 to the arbitration unit 40B (arrowhead A2).

The following is an exemplification of the process when the connection request occurs in the connection switchover unit 5B in such a status. Herein, for instance, an assumption is that the packet sent from the node A is retained in the head field of the shared input buffer 20 and the packet sent from the node B is retained in the second field. The buffer control unit (1)90, which controls the shared input buffer 20, transmits the request signal of the packet (which is also termed a packet request) belonging to the partition #0 to the arbitration unit 40B (arrowhead A3).

Then, the arbitration unit 40B sends the acknowledge (ACK) back to the buffer control unit (1)90 of the shared input buffer 20 (arrowhead). Upon receiving ACK, the buffer control unit (1)90 of the shared input buffer 20 increments the credit count by 1, which represents the free space count of the input buffer 20. Moreover, the connection switchover unit 5B connects, based on the instruction of the arbitration unit 40B, the shared input buffer 20 to the output buffer 12D. As a result, the head packet of the shared input buffer 20 (partition #0) is discarded (arrowhead A5).

The packet belonging to the partition #0 is discarded, whereby the packet of the subsequent partition #1 is shifted to the head of the shared input buffer 20. As a result, it follows that the packet of the subsequent partition #1 is transmitted to the output buffer of the destination node.

As discussed above, according to the information processing device 1 in the first working example, the affection caused by the occurrence of the blocking error in the system with the plural nodes being connected is locally limited via the connection switchover units 5A, 5B. In the information processing device 1, each of the partitions embraces the plurality of nodes, and the buffers shared between the partitions are used by the plurality of nodes. With this configuration, if the blocking error occurs in the node belonging to one partition, the arbitration unit 40B is instructed to set the node retaining the packet addressed to the node undergoing the error as the arbitration process target node in a way that maximizes the credit count representing the free space of the output buffer toward this node.

Further done is the setting of discarding the packet to be received at the ingress of the output buffer toward that node. As a result, on the shared buffer, the packet addressed to the port-blocking node is directly transmitted to the destination node via the connection switchover unit 5B and is discarded at the ingress of the output buffer in accordance with the arbitration process of the arbitration unit 40B. As a result of the process such as this, it is feasible to restrain the affection of the blocking error in one partition from being exerted on another partition. For example, the process described above may be executed by the error control unit 60 and the credit control unit (2)80 without changing the processes of the arbitration unit 40B, the buffer control unit (1)90 and the buffer control unit (2)70.

### <Modified Example>

The first working example has discussed the process in the case where the respective nodes belong to the partitions #0, #1. The processes of the information processing device 1 are not necessarily limited to the case where the respective nodes are embraced by the partitions. Namely, the definition of the partition may be omitted in the process described above. Namely, even in the system having none of the definition of the partition, the same configuration disables the affection of the blocking error taking place in one node from being exerted on other nodes. To be specific, even in the system configured by establishing the connections of the plurality of nodes via the connection switchover units and the shared buffers provided between the plural nodes, similarly to the first working example, the affection of the blocking error can be reduced. In short, the control may be done so that the packet addressed to the node with the occurrence of the blocking error is set as the arbitration processing target of the arbitration unit 40B.

To attain this scheme, the information processing device 1 may include the following configurations.
(1) The information processing device 1 includes a means for detecting the blocking error in the destination node.
(2) The information processing device 1 includes a means for recognizing the head packet of the shared input buffer from a packet transmitted to the destination node undergoing the occurrence of the blocking error. For instance, when the blocking error occurs in the node D, it is sufficient to determine whether the packet addressed to the node D exists in the head of the shared input buffer or not. For instance, a scheme is that both of the source node and the destination node are specified in the packet as a substitute for describing the source node in the packet, as in FIG. 11. This scheme enables the destination of the packet to be determined by reading the head packet of the shared output buffer. Further, e.g., irrespective of the definition of the partition, the source ID => destination ID translation table 411 in FIG. 10 may be defined. The scheme in this case does not contain the definition of the partition in the configuration of the first working example, in which the processing procedures are the same as those in the first working example.
(3) The information processing device 1 includes a means for setting the packet recognized in the configuration (2) as the arbitration processing target of the arbitration unit. For example, when the blocking error occurs in the node D, the shared input buffer retaining the packet addressed to the node D in the head field thereof may be set as the arbitration processing target.

Reversely, even if three or more partitions are provided, similarly to the first working example, it is possible to restrain the affection of the blocking error in one partition from being exerted on other partitions.

In the first working example, the information processing device 1 includes the two connection switchover units 5A, 5B and the shared buffers existing between these connection switchover units 5A, 5B. Further, the nodes A, B serving as the system boards are connected to the input side of the connection switchover unit 5A. Moreover, the nodes C, D serving as the I/O units are connected to the output side of the connection switchover unit 5B. The processes of the information processing device 1 are not, however, limited to such a network architecture. For instance, also in the system where plural pieces of system boards are connected to each other, similarly, with the configuration described above, it is feasible to reduce the degree of how much the blocking error in one system board affects other system boards. The same processes are realized also in other networks, e.g., a network taking a bus topology in which the connection switchover units 5A, 5B are not the crossbars, and any one or both of the connection switchover units are accessed by the respective nodes on the basis of time-division by use of timeslots.

### [Second Working Example]

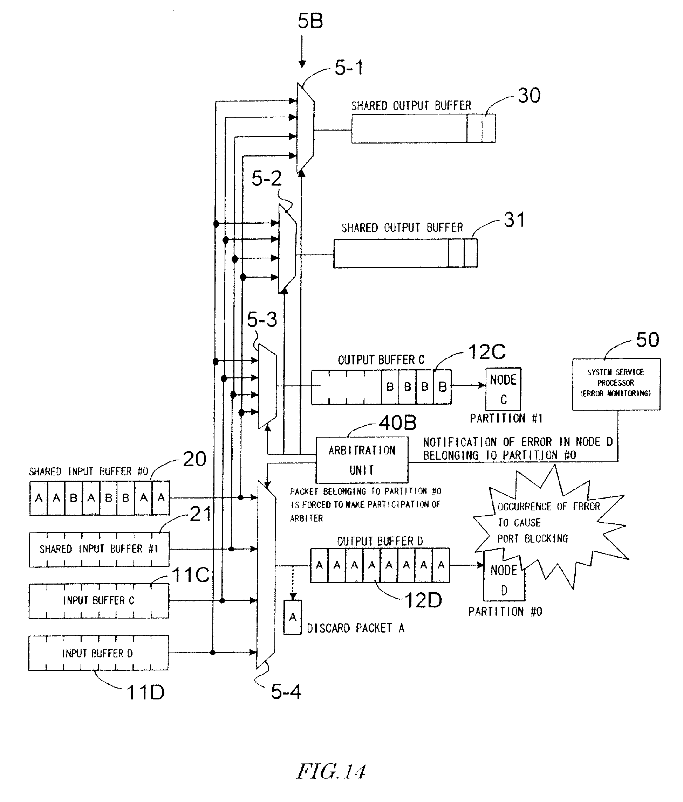

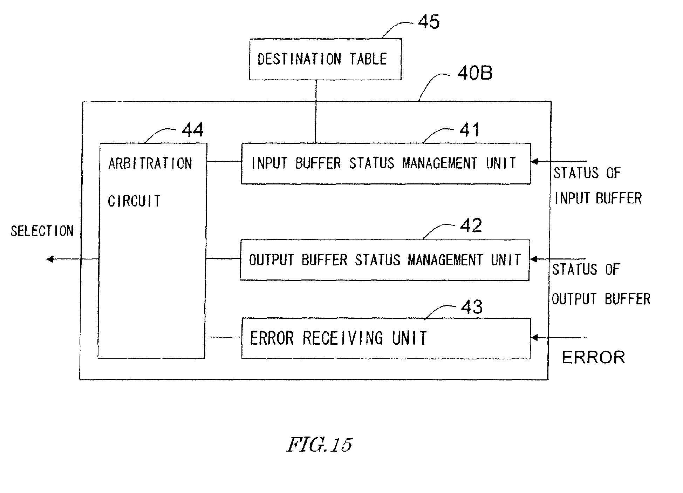

The information processing device 1 according to a second working example will be described with reference to FIGS. 14 and 15. The first working example has exemplified the operations dealing with the case where the blocking error occurs in a certain node. To be specific, the error control unit 60 instructs the credit control unit (2)80 to maximize the credit count representing the free space of the output buffer 12D connected to the node in which the blocking error occurs or to show the free status of the buffer. With this instruction, even when the blocking error occurs in the node D, the credit count is set to provide the free space in the output buffer 12D which retains the packet addressed to the node D. Then, the information indicating that the output buffer 12D has the free space is transmitted to the arbitration unit 40B. Further, there is done the setting of discarding the packet at the ingress of the output buffer 12D. As a result of this setting, the packet addressed to the node D and belonging to the partition #0 is forwarded to the output buffer 12D via the switch 5-4 from the shared input buffer 20 and is then discarded. Consequently, in the shared input buffer 20, the affection of the blocking error in the node D upon another node C or another partition #1 is avoided.

In place of these procedures, the system service processor 50, which detects the error, may notify the arbitration unit 40B of the occurrence of the blocking error in the node D. Through the process such as this, the arbitration unit 40B may set, as the arbitration target buffer, the input buffer of which the head retains the packet addressed to the node in which the error is caused. The configuration described above, in the same as in the first working example, reduces to the greatest possible degree the affection of the blocking error in one partition upon other partitions. Other configurations and operations in the second working example are the same as in the case of the first working example. Such being the case, the same components as those in the first working example are marked with the same numerals and symbols, and the descriptions thereof are omitted. Further, the reference to the drawings in FIGS. 1 through 13 is made as the necessity arises.

FIG. 14 is a diagram illustrating a connecting process within the network unit 10B. In FIG. 14 also, the connection switchover unit 5B depicted in FIGS. 3 and 4 is illustrated in the way of being segmented into the switches 5-1, 5-2, 5-3 and 5-4. Namely, the packets in the shared input buffers 20, 21 and the input buffers 11C, 11D are inputted to the switches 5-1, 5-2, 5-3 and 5-4 and are output to the node C, the node D or the connection switchover unit 5A via the output buffers 12C, 12D and the shared output buffers 30, 31.

In the second working example, if the error occurs in one node, e.g., the node D of the partition #1, the error monitoring circuit in the system service processor 50 notifies the arbitration unit 40B that the blocking error occurs in the partition #0 (the node D). The system service processor 50 corresponds to an error notifying unit to notify the arbitration unit of the occurrence of the blocking error. Further, the system service processor 50 corresponds also to a control device to monitor at least the occurrence of the error in the information processing device.

The arbitration unit 40B receiving the blocking error, as far as the packet belonging to the partition #0 exists in the shared input buffer 20, sets this packet as the arbitration processing target. To be specific, the packet existing in the shared input buffer #0 and sent from the node A participates in the arbitration process and is output to the connection switchover unit 5B, i.e., the switch 5-4 from the shared input buffer 20.

In the second working example also, similarly to the first working example, the cutoff unit is provided, which cuts off the communications at the ingress of the output buffer 12D. It may be sufficient that the arbitration unit 40B cuts off the communications at the ingress of the output buffer 12D. When the system service processor 50 detects the blocking error in the node D, however, the cutoff unit may cut off the communications at the ingress of the output buffer 12D.

Then, the packet sent from the node A is output, whereby the packet retained in the shared input buffer #0 is shifted one by one within the shared input buffer #0. As a result, the packet sent from the node B belonging to the partition #1 reaches the head of the shared input buffer 20. Accordingly, the packet transferred and received in the partition #1 in the next arbitration process can be output from the shared input buffer 20. Through these procedures, the degree of how much the error caused in the partition #0 affects the partition #1 is reduced.

FIG. 15 illustrates an in-depth configuration of the arbitration unit 40B. The arbitration unit 40B includes an arbitration circuit 44 and three input units toward the arbitration circuit 44. The three input units are an input buffer status management unit 41, an output buffer status management unit 42 and an error receiving unit 43.

The input buffer status management unit 41 has items of information showing existence or non-existence of the packet and a transmission source (input port) of the head packet with respect to each of the individual input buffers (the shared input buffers 20, 21 and the input buffers 11C, 11D). The input buffer status management unit 41 is exemplified by registers (herein called request registers) which retain the items of information showing these statuses and are provided corresponding to the respective input buffers.

A destination table 45 is connected to the input buffer status management unit 41. The destination table is a table for defining a destination node number associated with a source node number. For instance, in the second working example, the partition #0 embraces the node A and the node D. Accordingly, the node number of the node D specifies the destination of the packet sent from the node A in the destination table. Further, the partition #1 embraces the node B and the node C. Accordingly, the node number of the node C specifies the destination of the packet sent from the node B in the destination table. Note that the node number is, though this nomenclature is given herein, defined as information enabling the connection switchover unit 5B to identify the individual node. In place of the node number, there may be used a port number specifying each port of the connection switchover unit 5B.

The output buffer status management unit 42 retains the free statuses of the output buffers (the output buffers 12C, 12D and the shared output buffers 30, 31) corresponding to the destination nodes. The output buffer status management unit 42 is exemplified by the registers corresponding to the respective output buffers.

The error receiving unit 43 receives the error information from the system service processor 50 and generates an error occurrence/non-occurrence signal on a per-node basis. For example, the system service processor 50 transmits the information for identifying the destination node and the information showing a degree of the error to the error receiving unit. The error receiving unit 43 has an error register on the per-node basis. Then, the error receiving unit 43, if the error information given from the system service processor 50 indicates the blocking error, switches ON the error register corresponding to the node where the blocking error occurs. A value of the error register on the per-node basis is inputted to the arbitration circuit 44.

The arbitration circuit 44, if the destinations of the respective request registers of the input buffer status management unit 41 conflict with each other, selects the input buffer on the basis of, e.g., the LRU algorithm. Further, the arbitration circuit 44, whereas if the destinations of the respective request registers of the input buffer status management unit 41 do not conflict with each other, may select all of the input buffers (retaining the packets) with the requests existing in the request registers. The arbitration circuit 44 inputs a tuple of the selected input buffer and the destination thereof to the connection switchover unit 5B.

The connection switchover unit 5B includes, for instance, similarly to FIG. 5, the switches 5-1 through 5-4. The connection switchover unit 5B selects, based on a selection signal transmitted from the arbitration circuit 44, some of the input buffers including the shared input buffers 20, 21, and connects the selected input buffers to the destination nodes C, D via the output buffers 12C, 12D.

In the information processing device 1 of the second working example, if the error register of any one of the nodes is switched ON, the input buffer containing the packet addressed to this node is set as the arbitration target buffer. Therefore, in the information processing device 1 of the second working example, the input buffer addressed to the node where the blocking error occurs participates in the arbitration and is set as the arbitration target on the basis of, e.g., the LRU algorithm.

The connection switchover unit 5B configures, in response to a request given from the arbitration circuit 44, a network for connecting the input buffer which retains the packet sent from the source node to the output buffer toward the destination node.

As discussed above, according to the information processing device 1 in the second working example, if the blocking error occurs in any one of the packet destination nodes, the shared input buffer retaining the packet to be sent back to the destination node is set as the arbitration processing target of the arbitration unit 40B. Accordingly, the packet addressed to the node where the blocking error occurs is set as a forwarding target packet of the connection switchover unit 5B in accordance with the procedures such as the LRU algorithm. In this case, the blocking error occurs in the forwarding destination node, and hence the forwarded packet is normally discarded. The configuration such as this is, however, as illustrated in FIG. 6, extremely effective in such a case that the packet of the partition #0 (the source node A) where the blocking error occurs and the packet of the partition #1 (the source node B) where the blocking error does not occur, exist in mixture in the shared input buffer. Namely, the exertion of the affection of the blocking error in the partition #0 upon the partition #1 is reduced to the greatest possible degree.

### <Other Modified Examples>

Each of the components in the first working example and the second working example includes the hardware circuit, e.g., the transistor which includes the logic gates such as AND gate, the OR gate and NOT gate. In place of the hardware circuits, however, a DSP (Digital Signal Processor), a CPU (Central Processing Unit), etc may be included. The functions in, e.g., FIG. 6 or FIG. 15 may be realized by the DSP, the CPU or the like executing a computer program deployed in an execution-enabled manner on the memory. Further, at least a part of the procedures illustrated in FIG. 13 may be executed by the DSP, the CPU, etc.

In the first working example and the second working example, the arbitration process is exemplified mainly by the process of the arbitration unit 40B. On the other hand, the descriptions of the configuration and the operation of the arbitration unit 40A are omitted. The configuration and the operation of the arbitration unit 40A are, however, the same as those of the arbitration unit 40B.

In the first working example and the second working example, the arbitration unit 40B determines the input buffer by the LRU algorithm in any case. The information processing device 1 is not, however, limited to this scheme. For example, each of the arbitration units 40A, 40B may also determine the input buffer according to simple round-robin. Moreover, for instance, the input buffer may also be determined in a way that gives the priority to the input buffer retaining the packet addressed to the output buffer having a larger free capacity.

In the first working example and the second working example, as illustrated in FIG. 3, in the information processing device 1, the system boards including the CPUs and the I/O boards are connected by the connection switchover units 5A, 5B. Therefore, the information processing device 1 is exemplified typically by the computer having the plurality of partitions. The information processing device 1 is not, however, limited to this example. In short, the information processing device 1 can be applied to a general type of system including the shared input buffers shared with the plurality of nodes, the output buffers and the network for establishing the connections between the shared input buffers and the output buffers. For example, the configuration described above can be applied to a computer system configured by connecting the plurality of computers via the crossbars.

## Claims

1. An information processing device, comprising:
a plurality of input buffers to include shared input buffer which retains data transmitted to destination nodes from a plurality of source nodes;
an output buffer to retain the data on a per destination node basis for a period till the data transmitted to the destination node is output to the destination node;
a connection switchover unit to establish a connection in a switchable manner between the input buffer and the output buffer; and
an arbitration unit to determine the input buffer connected to the output buffer by the connection switchover unit from within the plurality of input buffers,
wherein the arbitration unit, when a blocking error disabling the data from being output to the destination node from the output buffer occurs in any one of the destination nodes, determines the input buffer connected to the output buffer from within the input buffers including the input buffer retaining the data addressed to the destination node in which the blocking error occurs, and
the connection switchover unit connects the determined input buffer to the output buffer of the destination node for the data retained in the input buffer.

2. The information processing device according to claim 1, further comprising an error control unit to control, when the blocking error occurs, the output buffer of the destination node in which the blocking error occurs,
wherein the arbitration unit determines the input buffer connected to the output buffer from within the input buffers including the input buffer retaining the data addressed to the destination node connected to the connection switchover unit via the output buffer having a free space, and
the output buffer includes: a notifying unit to notify the arbitration unit of information indicating that the output buffer has the free space under the control of the error control unit; and a cutoff unit to stop storing a new piece of data in the output buffer under the control of the error control unit.

3. The information processing device according to claim 1, further comprising an error notifying unit to notify the arbitration unit that the blocking error occurs in the destination node,
wherein the arbitration unit determines the input buffer connected to the output buffer from within the input buffers including the input buffer retaining the data addressed to the destination node in which the blocking error occurs.

4. An information system, comprising:
an information processing device including:
a plurality of source nodes;
a plurality of destination nodes to receive data from the source nodes;
a plurality of input buffers to contain shared input buffers retaining the data transmitted to the respective destination nodes from the plurality of source nodes;
an output buffer to retain the data on a per destination node basis for a period till the data transmitted to the destination node is output to the destination node;
a connection switchover unit to establish a connection in a switchable manner between the input buffer and the output buffer; and
an arbitration unit to determine the input buffer connected to the output buffer by the connection switchover unit from within the plurality of input buffers; and
a control device to monitor at least the occurrence of the error in the information processing device,
wherein the arbitration unit, when a blocking error disabling the data from being output to the destination node from the output buffer occurs in any one of the destination nodes, determines the input buffer connected to the output buffer from within the input buffers including the input buffer retaining the data addressed to the destination node in which the blocking error occurs, and
the connection switchover unit connects the determined input buffer to the output buffer of the destination node for the data retained in the input buffer.
